Europäisches Patentamt

**European Patent Office**

**Office européen des brevets**

(11) Numéro de publication : **0 002 629**
**B1**

(19)

(12) **FASCICULE DE BREVET EUROPÉEN**

(45) Date de publication du fascicule du brevet : **21.10.81**

(21) Numéro de dépôt : **78400200.8**

(22) Date de dépôt : **29.11.78**

(51) Int. Cl.³ : **B 62 J 39/00, B 62 J 31/00**

(54) **Dispositif permettant le nettoyage de la chaîne et du dérailleur d'une bicyclette.**

(30) Priorité : **12.12.77 FR 7737295**

(43) Date de publication de la demande :
**27.06.79 (Bulletin 79/13)**

(45) Mention de la délivrance du brevet :
**21.10.81 Bulletin 81/42**

(84) Etats contractants désignés :
**BE CH DE GB LU NL SE**

(56) Documents cités :
**DE - C - 59 078**
**DE - C - 88 181**
**US - A - 1 687 688**
**US - A - 1 998 682**
**US - A - 3 931 991**

(73) Titulaire : **Petite, Jean Louis**
**4, rue de Naples**
**F-71670 LE BREUIL (FR)**

(72) Inventeur : **Petite, Jean Louis**
**4, rue de Naples**
**F-71670 LE BREUIL (FR)**

Imprimerie Jouve, 17, rue du Louvre, 75001 Paris, France

## Dispositif permettant le nettoyage de la chaîne et du dérailleur d'une bicyclette

La présente invention a pour objet un dispositif de nettoyage des chaînes et dérailleurs de bicyclette.

Etat de la technique antérieure : document US-A-3 931 991 (Marchello). Il est bien connu que ce nettoyage qui doit être fréquent pour éviter une usure prématurée par abrasif, et pour un meilleur fonctionnement présente des inconvénients. Le moyen le plus utilisé étant le seau de solvant et le pinceau, ce qui occasionne des éclaboussures sur les vêtements et le sol et un nettoyage insuffisant.

La présente invention a pour but de remédier à ces inconvénients, en réalisant un dispositif qui permet de baigner l'ensemble dérailleur dans le solvant et en y faisant circuler la chaîne par rotation du pédalier. Le nettoyage est de plus courte durée, moins fastidieux et plus efficace.

Sur le dessin :

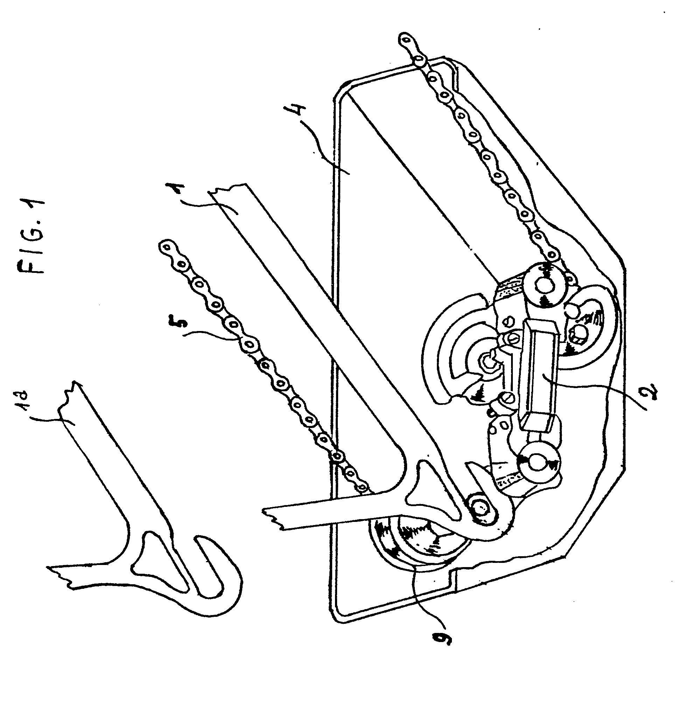

— la Fig. 1 est une vue de côté qui représente la fourche d'une bicyclette et son dérailleur munie du réservoir à solvant et du support de chaîne suivant l'invention.

— la Fig. 2 est une vue de l'axe sur lequel vient se fixer l'ensemble des éléments.

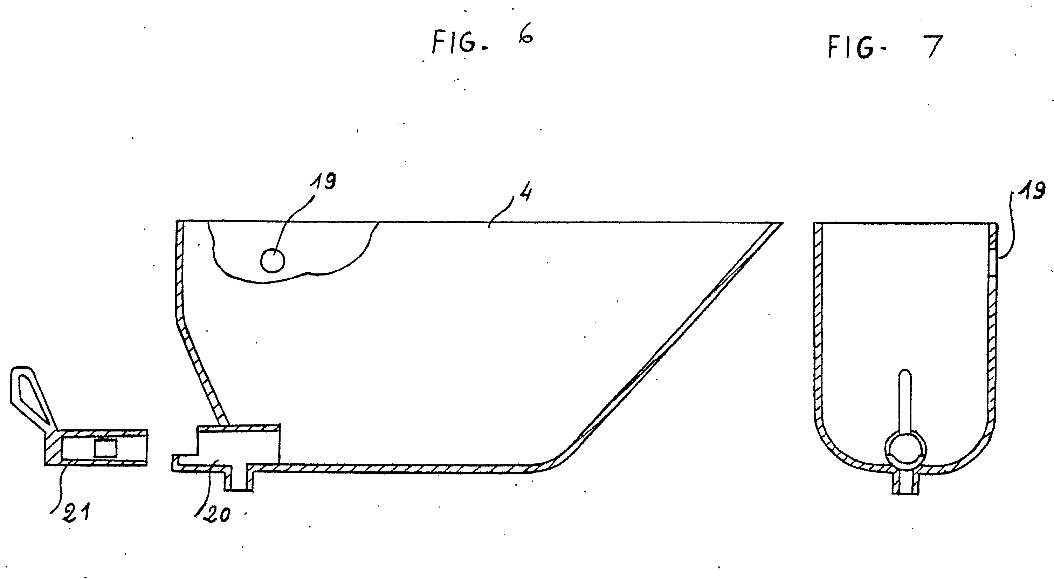

— la Fig. 3 est une vue de galet en matière plastique qui supporte la chaîne.

— la Fig. 4 est une vue de l'écrou moleté qui fixe l'ensemble axe galet sur la fourche.

— la Fig. 5 est une vue de l'écrou à étoile qui fixe le réservoir à solvant.

— la Fig. 6 représente le réservoir à solvant en matière plastique et son robinet de vidange.

— la Fig. 7 représente la vue en bout du réservoir et son trou de fixation.

Les sept figures représentent un dispositif de nettoyage de transmission de bicyclette munie d'un dérailleur.

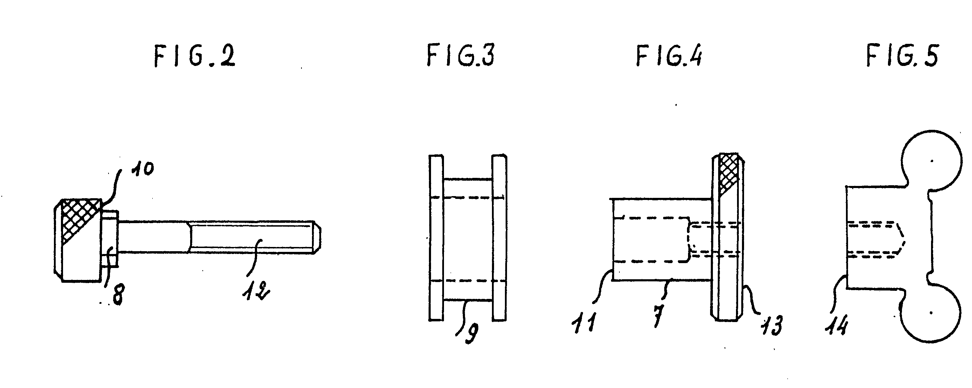

Selon l'invention, le dispositif pour nettoyage de la chaîné (5) et du dérailleur (2) d'une bicyclette comporte un ensemble mécanique et un réservoir (4) à solvant, caractérisé en ce que l'ensemble mécanique comprend une tige filetée (12) (figure 2), un moyen (8, 10) de fixation de la tige (figure 2) sur la fourche (1) à l'emplacement de la roue, une poulie (9) sur la tige (figure 2) destinée à recevoir la chaîne (5) et deux écrous vissés sur la tige (figure 2) entre lesquels est fixée la paroi du réservoir.

L'utilisation se fait la bicyclette suspendue par le guidon, après la mise à l'horizontale du réservoir (4) pivotant sur la tige (12) et le serrage de celui-ci ; le remplissage se fait à environ deux centimètres du bord ; l'ensemble dérailleur (2) et chaîne (5) baignant dans le solvant se nettoie par barbotage en tournant le pédalier, la chaîne étant tendue par la poulie (9).

Après utilisation, la vidange du réservoir (4) se fait par un robinet incorporé (20) en tournant le boisseau (21)

Le dispositif objet de l'invention peut être utilisé sur toutes les bicyclettes munies d'un dérailleur ; pour celles qui possèdent des garde-boue, on dévisse et écarte la tringle côté dérailleur.

## Revendications

1. Dispositif pour nettoyage de la chaîne (5) et du dérailleur (2) d'une bicyclette qui comporte un ensemble mécanique et un réservoir (4) à solvant, caractérisé en ce que l'ensemble mécanique comprend une tige filetée (12) (figure 2), un moyen (8, 10) de fixation de la tige (figure 2) sur la fourche (1) à l'emplacement de la roue, une poulie (9) sur la tige (figure 2) destinée à recevoir la chaîne (5) et deux écrous vissés sur la tige (figure 2) entre lesquels est fixée la paroi du réservoir.

2. Dispositif suivant la revendication 1 caractérisée en ce que la poulie (9) est en plastique.

3. Dispositif suivant la revendication 2 caractérisé en ce que le nettoyage se fait par barbotage dans un solvant contenu dans le réservoir (4).

4. Dispositif suivant la revendication 3 caractérisé en ce que le réservoir (4) se vidange par un robinet (20).

## Claims

1. Device for cleaning the chain (5) and the shifting gear (2) of a bicycle, composed of a mechanical system and a solvent tank (4) which is characterized by the fact that the mechanical system includes a threaded rod (12) (fig. 2), a method (8, 10) for fixing the rod (fig. 2) on the fork (1) where the wheel is placed, a pulley (9) on the rod (fig. 2) intended for receiving the chain (5) and two nuts screwed on the rod (fig. 2) between which the wall of the tank is fixed.

2. Device according to Claim 1 characterized by the fact that the pulley (9) is of plastic.

3. Device according to Claim 2 characterized by the fact that cleaning is realized by dipping in a solvent contained in the tank (4).

4. Device according to Claim 3 characterized by the fact that the tank (4) is drained through a tap (20).

## Ansprüche

1. Vorrichtung zum Reinigen der Kette (5) und der Kettenschaltung (2) eines Fahrrades, das eine mechanische Einheit und einen Lösemitteltank (4) umfasst, gekennzeichnet dadurch, dass die mechanische Einheit folgendes enthält : eine mit einem Gewinde versehene Stange (12) (Bild 2), ein Befestigungsmittel (8, 10) der Stange (Bild 2) auf der Gabel (1) an Stelle des Rades, eine Rolle (9) auf der Stange (Bild 2) zwecks Aufnahme der Kette (5) und zwei auf die Stange geschraubte Mutterschrauben (Bild 2), zwischen denen die Wand des Tankes befestigt ist.

2. Vorrichtung nach Anspruch 1, dadurch gekennzeichnet, dass die Rolle (9) aus Kunststoff besteht.

3. Vorrichtung nach Anspruch 2, dadurch gekennzeichnet, dass das Reinigen mittels Tauchbad in einem mit Lösemittel gefüllten Tank (4) stattfindet.

4. Vorrichtung nach Anspruch 3, dadurch gekennzeichnet, dass der Tank (4) durch einen Hahn geleert wird (20).

FIG. 1

FIG.5

FIG.4

FIG.3

FIG.2

FIG. 6

FIG. 7

19

4

19

3

21

20